# EUROPÄISCHE PATENTANMELDUNG

(11) **EP 2 993 752 A2**
(43) Veröffentlichungstag der Anmeldung: **09.03.2016**
(21) Anmeldenummer: 15183511.3
(22) Anmeldetag: 02.09.2015
(51) Int. Cl.: H02J 3/00

(54) **ENERGIEVERSORGUNGSSYSTEM**

(30) Priorität: 02.09.2014 AT 506042014
(71) Anmelder: Schweighofer, Franz, 5020 Salzburg (AT); Schweighofer, Franz Markus, 5020 Salzburg (AT); Schweighofer, Sebastian, 5020 Salzburg (AT); Schweighofer, Christoph, 5020 Salzburg (AT); Schweighofer, Elfriede, 5020 Salzburg (AT)
(72) Erfinder: Schweighofer, Franz, 5020 Salzburg (AT); Schweighofer, Franz Markus, 5020 Salzburg (AT); Schweighofer, Sebastian, 5020 Salzburg (AT); Schweighofer, Christoph, 5020 Salzburg (AT); Schweighofer, Elfriede, 5020 Salzburg (AT)
(74) Vertreter: Sonn & Partner Patentanwälte

(57) **Zusammenfassung**

Energieversorgungssystem (1) zur Versorgung mehrerer Gruppen (G1-G4) von Verbrauchern mit elektrischer Energie, wobei jede Gruppe (G1-G4) über einen eigenen Stromzähler (4.1-4.4) mit einem öffentlichen Energieversorgungsnetz (3) verbunden ist, wobei jede Gruppe (G1-G4) zusätzlich über jeweils einen Wechselrichter (5.1-5.4) mit einer einzigen, für alle Gruppen (G1-G4) gemeinsamen lokalen Energieversorgungsanlage (6) verbunden ist, wobei jeder Wechselrichter (5.4-5.4) steuerbar mit einer zentralen Steuereinrichtung (7) verbunden ist, welche zur Einstellung der von jedem Wechselrichter (5.4-5.4) an die damit verbundene Gruppe (G1-G4) und /oder das öffentliche Energieversorgungsnetz (3) bereitzustellenden elektrischen Leistung ausgebildet ist.

## Beschreibung

Die Erfindung betrifft ein Energieversorgungssystem zur Versorgung mehrerer Gruppen von Verbrauchern mit elektrischer Energie, wobei jede Gruppe über einen eigenen Stromzähler mit einem öffentlichen Energieversorgungsnetz verbunden ist.

Die Benutzung einer Vielzahl elektrischer Verbraucher in Wohngebäuden sowie in Gewerbe- und Industrieunternehmen führt zu einem entsprechend hohen Strombezug aus öffentlichen Energieversorgungsnetzen. Gleichzeitig wünschen sich jedoch die Benutzer möglichst wenig für aus dem öffentlichen Netz bezogene Energie zu bezahlen. Aus diesem Grund sind aus dem Stand der Technik Energieversorgungssysteme bekannt, welche eine zumindest teilweise Versorgung elektrischer Verbraucher mit selbst bzw. lokal erzeugter Energie und somit teilweise, oder in einem sogenannten Inselbetrieb auch vollständig, unabhängig von öffentlichen Energieversorgungsnetzen ermöglichen.

Die EP 2 293 409 A2 offenbart ein Inselenergienetz aus mehreren miteinander verbundenen Inseleinheiten. Jede Inseleinheit weist hierbei unter anderem eine Photovoltaikanlage, einen Energiespeicher und eine Verbindung zu einem Verbraucher auf. Die mit einer hauseigenen Photovoltaikanlage erzeugte Energie kann somit in dem selben Haus verbraucht oder gespeichert werden. Zudem kann mit einer Inseleinheit erzeugte überschüssige Energie über das Inselenergienetz einer anderen Inseleinheit zum Verbrauch oder zur Speicherung zur Verfügung gestellt werden. Ebenso kann, im Falle zu geringer selbst erzeugter Energie, der fehlende Betrag von einer anderen Inseleinheit bereitgestellt werden. Für die dezentral ausgeführte Steuerung der Energieflüsse sind Mittel zur Kommunikation mit anderen Inseleinheiten vorgesehen und ausgebildet, entsprechende Anfragen an andere Inseleinheiten zu senden bzw. von anderen Inseleinheiten zu empfangen.

Die WO 2014/023724 A2 offenbart ein Photovoltaik-Speichersystem zur Versorgung der Verbraucher in einem Haushalt mit Solarenergie, mit einem Energiespeicher und einer Steuervorrichtung. Die Steuervorrichtung ist mit zumindest einem der Verbraucher gekoppelt und schaltet diesen ab, wenn mehr als die aktuell benötigten Energie durch die Photovoltaikanlage erzeugt wird, um den Energiespeicher effizienter zu laden. Demgegenüber wird der Verbraucher hinzu geschaltet, wenn weniger als die aktuell benötigte Energie durch die Photovoltaikanlage erzeugt wird, um die Energieentnahme aus dem Energiespeicher zu optimieren. Das Photovoltaik-Speichersystem kann zudem mit einem elektrischen Versorgungsnetz verbunden sein.

Die aus dem Stand der Technik bekannten Energieversorgungssysteme sind somit für die Versorgung von Verbrauchern mit lokal erzeugter oder aus einem öffentlichen Energieversorgungsnetz bezogener Energie ausgebildet. Insbesondere sind hauseigene Photovoltaikanlagen vorgesehen, um den eigenen Haushalt mit lokal erzeugter Energie zu versorgen und allfällige überschüssige Energie in ein öffentliches oder ein internes Energieversorgungsnetz einzuspeisen. Die Verwendung einer eigenen Photovoltaikanlage pro Haushalt, gegebenenfalls mit eigenem Energiespeicher, ist jedoch kostenintensiv, da neben den anfallenden Installationskosten überschüssige lokal vorhandene Energie oft nur zu vorgegebenen, im allgemeinen geringen Tarifen in das öffentliche Energieversorgungsnetz eingespeist werden kann. Selbst bei Vorliegen eines Inselenergienetzes mit mehreren Inseleinheiten, die jeweils eine Photovoltaikanlage aufweisen, kann die lokal erzeugte Energie nicht in optimaler Weise genutzt bzw. auf die Inseleinheiten aufgeteilt werden, da hierfür eine koordinierte Steuerung der Energieflüsse zwischen den Inseleinheiten und eine Abstimmung der Kapazitäten der einzelnen Photovoltaikanlagen erforderlich wäre.

Es ist nun Aufgabe der Erfindung, ein Energieversorgungssystem wie eingangs angegeben zu schaffen, das sowohl die durch die Installation entstehenden Kosten als auch die durch den Betrieb der Verbraucher auftretenden Energiekosten reduziert, und insbesondere eine möglichst optimale Nutzung lokal erzeugter Energie durch mehrere Gruppen von Verbrauchern ermöglicht. Zudem soll das Energieversorgungssystem eine möglichst zuverlässige Versorgung mit Energie gewährleisten.

Hierfür sieht die Erfindung ein Energieversorgungssystem wie in Anspruch 1 definiert vor. Vorteilhafte Ausführungsformen und Weiterbildungen sind in den abhängigen Ansprüchen angegeben. Gemäß der Erfindung ist jede Gruppe zusätzlich über jeweils einen Wechselrichter mit einer einzigen, für alle Gruppen gemeinsamen lokalen Energieversorgungsanlage verbunden, wobei jeder Wechselrichter steuerbar mit einer zentralen Steuereinrichtung verbunden ist, welche zur Einstellung der von jedem Wechselrichter an die damit verbundene Gruppe und /oder das öffentliche Energieversorgungsnetz bereitzustellenden elektrischen Leistung ausgebildet ist. Unter einer Gruppe von Verbrauchern ist hierbei eine Menge von elektrisch betriebenen Geräten bzw. Verbrauchern elektrischer Energie zu verstehen, die alle über einen gemeinsamen Stromzähler mit einem öffentlichen Energieversorgungsnetz verbunden sind. Ein einzelne Gruppe kann somit beispielsweise die Menge der Verbraucher in einem Einfamilienhaus, einer Wohneinheit in einem Mehrfamilienhaus, einem Gewerbebetrieb oder einem Industrieunternehmen umfassen. Um jede Gruppe zusätzlich zur Energie aus einem öffentlichen Energieversorgungsnetz auch mit lokal erzeugter Energie zu versorgen, ist jede Gruppe zusätzlich mit jeweils einem Wechselrichter verbunden, wobei alle Wechselrichter an eine einzige, für alle Gruppen gemeinsame lokale Energieversorgungsanlage angeschlossen sind. Im Gegensatz zu aus dem Stand der Technik bekannten Systemen wird somit nicht jede Gruppe mit einer eigenen lokalen Energieversorgungsanlage ausgestattet. Die Installation einer einzigen lokalen Energieversorgungsanlage zur Versorgung aller Gruppen von Verbrauchern kann wesentlich kostengünstiger erfolgen als die Installation von Einzelanlagen. Dies wird besonders deutlich, wenn eine große Anzahl von Gruppen, beispielsweise 10, 100 oder mehr Gruppen, von der gemeinsamen lokalen Energieversorgungsanlage Energie beziehen. Das Energieversorgungssystem ist somit für die Anbindung entsprechend vieler Wohneinheiten oder sonstiger Gruppen, beispielsweise eines ganzen Wohnortes, an die lokale Energieversorgungsanlage vorgesehen.

Um die lokal erzeugte Energie möglichst effizient und dem Bedarf entsprechend auf die einzelnen Gruppen aufteilen zu können, ist eine zentrale Steuereinrichtung vorgesehen, mit welcher jeder Wechselrichter steuerbar verbunden ist. Die Steuereinrichtung ist hierfür zur Einstellung der von jedem Wechselrichter an die damit verbundene Gruppe und/oder das öffentliche Energieversorgungsnetz bereitzustellenden elektrischen Leistung ausgebildet.

Die Steuereinrichtung kann zudem für Eingaben durch einen oder mehrere Benutzer ausgebildet sein, sodass mittels dieser Eingaben die Funktion der Steuereinrichtung beeinflusst werden kann. Die bereitzustellende Leistung kann variieren und von der Steuereinrichtung, beispielsweise abhängig von Benutzereingaben oder Erfahrungswerten, ermittelt werden oder als konstante oder langsam veränderliche, beispielsweise geschätzte Größe in der Steuereinrichtung vorliegen. Sollte die derart bereitgestellte Leistung für die Versorgung der jeweiligen Gruppe nicht ausreichen, kann zusätzliche Energie aus dem öffentlichen Energieversorgungsnetz bezogen werden, während im Falle von über den Bedarf hinausgehend bereitgestellter lokaler Energie der Überschuss in das öffentlichen Energieversorgungsnetz eingespeist werden kann. Die Steuereinrichtung legt somit fest, wie viel elektrische Leistung über jeden einzelnen Wechselrichter transportiert wird und sorgt auf diese Weise für die Aufteilung der lokal erzeugten Energie auf die aktuell Strom benötigenden Verbraucher aller Gruppen. Dies ist ein wesentlicher Vorteil einer zentralen Steuereinrichtung gegenüber verteilt angeordneten Entscheidungseinheiten, da die zentrale Steuereinrichtung Informationen über das gesamte Energieversorgungssystem erfassen und verschiedene Einflussgrößen für die Ermittlung der optimalen Aufteilung auf die Gruppen berücksichtigen kann.

Gemäß einer vorteilhaften Ausführungsform der Erfindung ist die Steuereinrichtung zur Einstellung der von jedem Wechselrichter bereitzustellenden Leistung mit zwischen jeder Gruppe und dem öffentlichen Energieversorgungsnetz angeordneten, den Leistungsbedarf jeder Gruppe erfassenden ersten Sensoren verbunden. Die Steuereinrichtung ermittelt mit den ersten Sensoren den sich für den Betrieb der Verbraucher einstellenden Strombezug aus dem öffentlichen Energieversorgungsnetz und somit den genauen Leistungsbedarf jeder Gruppe. Dementsprechend steuert die Steuereinrichtung den der jeweiligen Gruppe zugeordneten Wechselrichter, um die von der Gruppe benötigte Leistung nicht über das öffentliche Energieversorgungsnetz, sondern über den Wechselrichter und somit über die lokale Energieversorgungsanlage bereitzustellen. Auf diese Weise wird jeder Gruppe von Verbrauchern nur jene Leistung zugeführt, die aktuell tatsächlich benötigt wird. Somit wird auch verhindert, einzelnen Gruppen über den Bedarf hinausgehende Leistung zuzuliefern und den Überschuss zu im allgemeinen ungünstigen Tarifen in das öffentliche Energieversorgungsnetz einzuspeisen, während andere Gruppen eventuell Leistung aus dem öffentlichen Energieversorgungsnetz beziehen müssen. Insbesondere kann im Falle von zu wenig verfügbarer lokaler Energie durch geeignete Steuerung der Wechselrichter verhindert werden, dass immer die selben Gruppen teure Energie aus dem öffentliche Energieversorgungsnetz beziehen müssen.

Wenn die Steuereinrichtung zur Erfassung der lokal verfügbaren elektrischen Leistung mit zwischen der lokalen Energieversorgungsanlage und den Wechselrichtern angeordneten zweiten Sensoren verbunden ist, kann die Steuereinrichtung die Aufteilung der lokalen Energie auf die Gruppen von Verbrauchern noch effizienter ausführen. Beispielsweise kann, wenn der Bedarf der Gruppen nicht genau bekannt ist, die Aufteilung der verfügbaren Leistung auf die Gruppen einem vorgegebenen Verhältnis entsprechend erfolgen. So kann einem Benutzer einer Gruppe von Verbrauchern, welcher mehr finanzielle Mittel für die gemeinsame lokale Energieversorgungsanlage bereitgestellt hat, auch mehr lokal erzeugte Energie zur Verfügung gestellt werden. Auch bei bekanntem Bedarf der Gruppen und für deren Versorgung zu wenig lokal verfügbarer Leistung kann die Steuereinrichtung die Aufteilung der Leistung vorgegebenen Kriterien entsprechend steuern.

Die lokal erzeugte Energie kann besonders effizient genutzt werden, wenn zwischen der lokalen Energieversorgungsanlage und den Wechselrichtern ein elektrischer Energiespeicher mit einem Laderegler angeordnet ist, die zweiten Sensoren zur Erfassung der lokal verfügbaren Leistung mit dem Energiespeicher und vorzugsweise auch mit der lokalen Energieversorgungsanlage verbunden sind, und der Laderegler zur steuerbaren Ladung des Energiespeichers mit der Steuereinrichtung verbunden ist. Auf diese Weise kann über den Bedarf der Gruppen hinausgehende lokal erzeugte Energie im Energiespeicher gespeichert werden, wofür der durch die Steuereinrichtung steuerbare Laderegler vorgesehen ist. Somit kann die Steuereinrichtung auf die gespeicherte Energie zur Versorgung der Gruppen zurückgreifen, wenn die aktuell lokal erzeugte Energie für deren Versorgung nicht ausreicht. Zudem kann sowohl die aktuell erzeugte als auch die im Energiespeicher, beispielsweise einer Batterie, gespeicherte Energie mit den zweiten Sensoren erfasst und an die Steuereinrichtung übermittelt werden. Mit diesen Informationen kann die Steuereinrichtung ermitteln, ob der Energiespeicher geladen werden soll, und festlegen, welcher Anteil einer über den Bedarf der Gruppen hinausgehend lokal erzeugten Energie für eine allfällige Ladung des Energiespeichers verwendet werden soll. Unter der "verfügbaren Leistung bzw. Energie" ist im Wesentlichen die Summe der aktuell erzeugten Leistung bzw. Energie und der dem Energiespeicher entnehmbaren Leistung bzw. Energie zu verstehen.

Besonders vorteilhaft ist es, wenn die Steuereinrichtung ausgebildet ist, bei über den Bedarf aller Gruppen hinausgehender lokal verfügbarer Leistung den für jede Gruppe erfassten Leistungsbedarf plus einen Anteil der über den Bedarf aller Gruppen hinausgehenden lokal verfügbaren Leistung als bereitzustellende elektrische Leistung am jeweiligen, der Gruppe zugeordneten, Wechselrichter einzustellen. Auf diese Weise kann die Steuereinrichtung beispielsweise Benutzervorgaben entsprechend die Wechselrichter ansteuern, um überschüssige lokal erzeugte und/oder gegebenenfalls in einem Energiespeicher gespeicherte Energie in das öffentliche Energieversorgungsnetz einzuspeisen. Insbesondere kann, wenn der Leistungsbedarf jeder Gruppe genau bekannt ist, die Menge von allfälliger in das öffentliche Energieversorgungsnetz einzuspeisender Energie zweckmäßig auf die Wechselrichter aufgeteilt werden und somit die finanzielle Rückvergütung an die Benutzer der Gruppen gesteuert werden.

Für eine effiziente Nutzung der lokal erzeugten Energie ist es zudem zweckmäßig, dass bei vollständig geladenem elektrischen Energiespeicher die Summe der über die Wechselrichter zusätzlich zum erfassten Leistungsbedarf bereitzustellenden Anteile zumindest die über den Bedarf aller Gruppen hinausgehende lokal erzeugte Leistung ist. Die Steuereinrichtung kann somit, wenn eine weitere Ladung des Energiespeichers nicht erforderlich ist, die Wechselrichter ansteuern, um zusätzlich zur vollständigen Versorgung der Gruppen gemeinsam zumindest die überschüssige lokal erzeugte Leistung, gegebenenfalls aber auch einen Teil der im Energiespeicher gespeicherten Energie in das öffentliche Energieversorgungsnetz einzuspeisen. Zudem steuert die Steuereinrichtung die Aufteilung dieser überschüssigen Leistung auf die Wechselrichter.

Um überschüssige lokal erzeugte Leistung auch zu einem späteren Zeitpunkt vollständig nutzen zu können, kann zudem vorgesehen sein, dass bei nicht vollständig geladenem elektrischen Energiespeicher zur Ladung des Energiespeichers die Summe der über die Wechselrichter zusätzlich zum erfassten Leistungsbedarf bereitzustellenden Anteile weniger als die über den Bedarf aller Gruppen hinausgehende lokal erzeugte Leistung ist. Demnach kann die Steuereinrichtung die über den Bedarf aller Gruppen hinausgehende lokal erzeugte Leistung vollständig oder nur zum Teil für die Ladung des Energiespeichers verwenden. In letzterem Fall, wonach nur ein Teil der überschüssigen lokal erzeugten Leistung für die Speicherladung verwendet wird, kann der verbleibende Rest der überschüssigen Leistung über die Wechselrichter in das öffentliche Energieversorgungsnetz eingespeist werden. Die Steuereinrichtung kann somit, durch gezielte Ansteuerung der Wechselrichter, die gesamte lokal erzeugte Leistung gleichzeitig für die Versorgung der Gruppen mit der genau benötigen Leistungsmenge, für die Ladung eines Energiespeichers und für die Einspeisung in ein öffentliches Energieversorgungsnetz verwenden.

Wenn die Steuereinrichtung ausgebildet ist, das Verhältnis der Anteile zueinander Benutzereingaben entsprechend festzulegen, kann durch Vorgaben der Benutzer der Gruppen die Aufteilung der überschüssigen lokal verfügbaren Leistung auf die Wechselrichter festgelegt werden. Beispielsweise kann der über einen bestimmtem Wechselrichter zusätzlich zum erfassten Leistungsbedarf bereitzustellenden Anteil im Vergleich zu durch andere Wechselrichter bereitgestellten Anteilen größer sein, wenn der über diesen Wechselrichter mit lokaler Energie versorgte Benutzer mehr finanzielle Mittel für die Errichtung des Energieversorgungssystem bereitgestellt hat. Dieser Benutzer erhält somit eine höhere Rückvergütung für in das öffentliche Energieversorgungsnetz eingespeiste Energie.

Gemäß einer weiteren bevorzugten Ausführungsform der Erfindung ist die Steuereinrichtung mit zumindest einem Verbraucher verbunden und ausgebildet, diesen Verbraucher automatisch und/oder Benutzereingaben entsprechend zu aktivieren und zu deaktivieren. Hierdurch können Verbraucher individuell über die Steuereinrichtung ein- und ausgeschaltet werden. Eine automatische Aktivierung und Deaktivierung durch die Steuereinrichtung kann abhängig von in die Steuereinrichtung eingegebenen Benutzervorgaben, beispielsweise abhängig von der Tageszeit oder der voraussichtlichen Anwesenheit des Benutzers, erfolgen. Ebenso kann die Aktivierung und Deaktivierung manuell durch den bzw. einen Benutzer erfolgen, wobei diese manuelle Anweisung vorzugsweise eine höhere Priorität als die automatische Anweisung aufweist.

Für eine zuverlässige Versorgung der Verbraucher mit lokal erzeugter elektrischer Energie ist es günstig, wenn die Steuereinrichtung ausgebildet ist, bei einer den Bedarf aller Gruppen nicht deckenden lokal verfügbaren Leistung zumindest einen Verbraucher, vorzugsweise Benutzereingaben entsprechend, automatisch zu deaktivieren oder nicht zu aktivieren, und gegebenenfalls weiteren Benutzereingaben entsprechend wieder zu aktivieren. Vorzugsweise verfügt die Steuereinrichtung über Benutzereingaben, aus welchen hervorgeht, welche Verbraucher für den Fall, dass zu wenig Leistung lokal verfügbar ist, vorübergehend deaktiviert werden können oder während dieser Zeitdauer von zu wenig lokaler Leistung erst gar nicht aktiviert werden. Ebenso können die Benutzereingaben Information über die maximale Dauer der nicht-Versorgung einzelner Verbraucher umfassen. Auf diese Weise kann die Wahrscheinlichkeit, alle wesentlichen Verbraucher mit lokal verfügbarer Leistung versorgen zu können, erhöht werden. Um gegebenenfalls dennoch die Versorgung dieser ausgewählten Verbraucher zu ermöglichen, ist es zweckmäßig, die automatische Steueranweisung außer Kraft setzen und die Aktivierung mittels der Steuereinrichtung manuell vornehmen zu können.

Um das Energieversorgungssystem auch unabhängig von einem öffentlichen Energieversorgungsnetz betreiben zu können, ist vorzugsweise vorgesehen, dass die Steuereinrichtung mit zumindest einer, zwischen einer Gruppe und dem öffentlichen Energieversorgungsnetz angeordneten Trennvorrichtung zum steuerbaren Trennen der Gruppe vom damit verbundenen öffentlichen Energieversorgungsnetz verbunden ist. Selbstverständlich kann für jede Gruppe des Energieversorgungssystems jeweils eine Trennvorrichtung vorgesehen sein. Für den Fall, dass zu wenig Leistung lokal verfügbar ist und die Gruppen vom öffentlichen Energieversorgungsnetz getrennt sind, können ebenfalls vordefinierte Verbraucher vorübergehend deaktiviert werden oder während dieser Zeitdauer von zu wenig lokaler Leistung erst gar nicht aktiviert werden.

Hinsichtlich der Installationskosten und der Realisierbarkeit des Energieversorgungssystems ist es besonders vorteilhaft, wenn die lokale Energieversorgungsanlage eine Photovoltaik-Anlage ist. Insbesondere kann eine zur Versorgung einer Vielzahl von Gruppen vorgesehene Photovoltaik-Anlage auf im Wesentlichen jeder geeigneten Fläche aufgebaut werden, ohne auf besondere Beeinträchtigungen der Benutzer, wie beispielsweise durch den Schattenwurf einer Windkraftanlage, Rücksicht nehmen zu müssen. An sich ist es aber selbstverständlich auch möglich, andere Arten von lokalen Energieversorgungsanlagen, wie z.B. Windkraftanlagen oder Wasserkraftanlagen, einzusetzen.

Damit die Steuereinrichtung den Benutzern einen Überblick über die zwischen den Gruppen und dem öffentlichen Energieversorgungsnetz fließenden Leistungen bereitstellen kann, ist vorteilhafter Weise die Steuereinrichtung zur Erfassung der aus dem öffentlichen Energieversorgungsnetz bezogenen bzw. in das öffentlichen Energieversorgungsnetz eingespeisten Energie mit den mit jeder Gruppe verbundenen Stromzählern verbunden. Zudem kann diese Information für die Verrechnung der Stromkosten unter den Benutzern verwendet werden. Beispielsweise kann ein Benutzer, welcher aufgrund der Steuereinrichtung hinsichtlich des Bezugs von Strom aus dem öffentlichen Energieversorgungsnetz benachteiligt wurde, durch Ausgleichszahlungen entschädigt werden.

Für die Steuerung der Leistungsflüsse ist zweckmäßig vorgesehen, dass die Steuereinrichtung eine Internetschnittstelle aufweist und ausgebildet ist, Anfragen zur Einspeisung lokal verfügbarer Leistung in das öffentliche Energieversorgungsnetz entgegenzunehmen und gegebenenfalls die Wechselrichter für eine solche Einspeisung zu steuern. Die Internetschnittstelle, welche drahtlos oder drahtgebunden ausgebildet sein kann, ermöglicht somit einem Betreiber eines öffentlichen Energieversorgungsnetzes einen Bedarf an allfälliger in dem Energieversorgungssystem verfügbarer Energie anzumelden. Die Steuereinrichtung kann daraufhin unter Berücksichtigung verschiedener Entscheidungskriterien bzw. Benutzereingaben entscheiden, ob lokal verfügbare Leistung in das öffentliche Energieversorgungsnetz eingespeist werden soll. Sollte dies der Fall sein, steuert die Steuereinrichtung die Wechselrichter entsprechend. Insbesondere kann aktuell über den Bedarf aller Gruppen hinausgehende lokal erzeugte Leistung und/oder im Energiespeicher gespeicherte Energie eingespeist werden. Ein Entscheidungskriterium kann insbesondere der aktuell für die Einspeisung gültige Tarif sein, sodass die Steuereinrichtung beispielsweise im Energiespeicher gespeicherte Energie nur dann einspeist, wenn der aktuelle Tarif für die Benutzer günstig ist.

Um den Leistungsbedarf der Gruppen und die voraussichtlich demnächst lokal erzeugbare Leistung abschätzen zu können, ist zudem vorgesehen, dass die Steuereinrichtung eine Internetschnittstelle aufweist und zur Ausführung ihrer Steuerfunktionen abhängig von über die Internetschnittstelle empfangenen Wetterdaten ausgebildet ist. Somit kann die Steuereinrichtung erwartete Wetterbedingungen bei der Steuerung der Wechselrichter berücksichtigen. Beispielsweise würde die Steuereinrichtung den Energiespeicher nicht leeren, wenn wenig oder kein Sonnenschein für die Erzeugung von Solarstrom zu erwarten ist, oder wenn auf Grund der Witterungsbedingungen ein erhöhter Strombedarf der Benutzer, beispielsweise zum Betrieb von Stromheizgeräten oder Klimaanlagen, zu erwarten ist.

Die Internetschnittstelle der Steuereinrichtung kann jedoch auch für die Eingabe von Benutzervorgaben oder für die Verbindung mit Sensoren zur Erfassung von Messdaten, beispielsweise den ersten und zweiten Sensoren, verwendet werden. Insbesondere kann die Steuereinrichtung für eine Fernsteuerung ausgebildet sein, wofür entsprechende Steueranweisungen über die Internetschnittstelle übertragen werden.

Um die Versorgungssicherheit der Verbraucher mit Energie weiter zu erhöhen, ist es günstig, wenn zur Ladung des elektrischen Energiespeichers mit Energie aus dem öffentlichen Energieversorgungsnetz die Wechselrichter für bidirektionalen Stromtransport ausgebildet sind und die Steuereinrichtung zur Einstellung der von jedem Wechselrichter an den damit verbundenen elektrischen Energiespeicher bereitzustellenden elektrischen Leistung ausgebildet ist. Hierdurch kann der Energiespeicher selbst dann geladen werden, wenn die lokal erzeugte Leistung für eine Speicherladung nicht ausreicht. Die Steuereinrichtung kann die Ladung des Energiespeichers insbesondere in einem Zeitintervall vornehmen, in welchem der Strombezug zu einem für die Benutzer günstigen Tarif möglich ist. Indem der Energiespeicher im Wesentlichen ständig geladen sein kann, ist es zudem möglich, einen durchschnittlichen Leistungsbedarf der Verbraucher über die lokal erzeugte Leistung zu decken und falls nötig auf die gespeicherte Energie zurückzugreifen. Somit kann auch die Anschlussleistung für eine Versorgung aus dem öffentlichen Energieversorgungsnetz zur Kostenreduktion verringert werden. Die Ladung des Energiespeichers mit Strom aus dem öffentlichen Energieversorgungsnetz würde dann bei verringerter Anschlussleistung über einen entsprechend längeren Zeitraum erfolgen.

Obgleich das Energieversorgungssystem mit einphasigen Wechselrichtern ausgebildet sein kann, ist vorteilhafter Weise für den Betrieb von drei Stromphasen erfordernden Verbrauchern mit lokal erzeugter Energie vorgesehen, dass die Wechselrichter dreiphasig ausgebildet sind.

Die Erfindung wird im Folgenden anhand von bevorzugten, nicht einschränkenden Ausführungsbeispielen unter Bezugnahme auf die Zeichnung noch weiter erläutert.
Fig. 1 zeigt schematisch eine Ausführungsform eines Energieversorgungssystems gemäß der Erfindung, und
Fig. 2 zeigt einen Zusammenhang zwischen im Energieversorgungssystem auftretenden Leistungen.

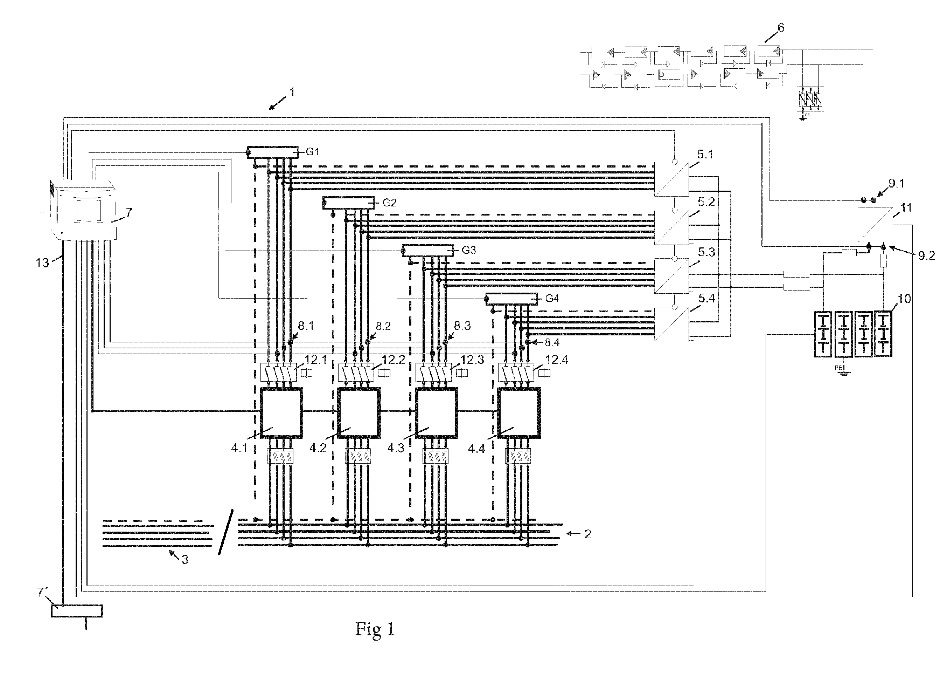

Das in Fig. 1 dargestellte Energieversorgungssystem 1 ist über ein Hausleitungsnetz 2 mit einem öffentlichen Energieversorgungsnetz 3 verbunden, wobei zwischen dem Hausleitungsnetz 2 bzw. dem öffentlichen Energieversorgungsnetz 3 und Gruppen G1-G4 von Verbrauchern, beispielsweise einzelnen Haushalten, in bekannter Weise je ein Stromzähler 4.1-4.4 vorgesehen ist, um die aus dem öffentlichen Energieversorgungsnetz 3 bezogene oder die darin eingespeiste Leistung erfassen zu können. Obgleich das Ausführungsbeispiel in Fig. 1 vier Gruppen G1-G4 von Verbrauchern zeigt, kann selbstverständlich eine geringere, insbesondere aber eine deutlich größere Anzahl von Gruppen über das Energieversorgungssystem 1 versorgt werden. Dementsprechend würde sich auch die Anzahl aller weiteren, jeweils genau einer Gruppe zugeordneten Komponenten ändern.

Ausgehend von den beispielhaften vier Gruppen G1-G4 ist jede Gruppe G1-G4 zusätzlich über jeweils einen, vorzugsweise bidirektional ausgebildeten Wechselrichter 5.1-5.4 mit einer einzigen, für alle Gruppen G1-G4 gemeinsamen lokalen Energieversorgungsanlage 6 verbunden, um die Gruppen G1-G4 von Verbrauchern mit lokal erzeugter Energie versorgen zu können. Vorzugsweise ist die lokale Energieversorgungsanlage 6 eine Photovoltaik-Anlage. Um die für die Gruppen G1-G4 oder das öffentliche Energieversorgungsnetz 3 über die Wechselrichter 5.1-5.4 bereitzustellende Leistung gezielt einstellen zu können, ist zudem jeder Wechselrichter 5.1-5.4 steuerbar mit einer zentralen Steuereinrichtung 7 verbunden. Die Gruppen G1-G4 sind somit nicht direkt an die lokale Energieversorgungsanlage 6 angeschlossen, da einerseits eine direkte Verbindung keine Steuerung der an die jeweiligen Gruppen G1-G4 und das öffentliche Energieversorgungsnetz 3 abzugebenden Leistungen zulassen würde und andererseits die Ausgänge der Stromzähler 4.1-4.4 über den gemeinsamen Anschlusspunkt an der lokalen Energieversorgungsanlage 6 kurzgeschlossen wären.

Um den Leistungsbedarf jeder Gruppe G1-G4 erfassen und demgemäß die von jedem Wechselrichter 5.1-5.4 bereitzustellende Leistung einstellen zu können, ist die Steuereinrichtung 7 mit ersten Sensoren 8.1-8.4 verbunden, welche zwischen jeder Gruppe G1-G4 und dem öffentlichen Energieversorgungsnetz 3 angeordnet sind. Um zudem die lokal verfügbare, elektrische Leistung erfassen zu können, ist die Steuereinrichtung 7 auch mit zweiten Sensoren 9.1, 9.2 verbunden, welche zwischen der lokalen Energieversorgungsanlage 6 und den Wechselrichtern 5.1-5.4 angeordnet sind.

Damit die Gruppen G1-G4 auch dann, wenn die lokal erzeugte Photovoltaik Leistung allein für die Versorgung der Gruppen G1-G4 nicht ausreicht, mit lokaler Energie betrieben werden können, ist zwischen der lokalen Energieversorgungsanlage 6 und den Wechselrichtern 5.1-5.4 ein elektrischer Energiespeicher 10 mit einem Laderegler 11 angeordnet. Der Laderegler 11 ist ebenfalls mit der Steuereinrichtung 7 verbunden, sodass die Steuereinrichtung 7 verschiedenen Kriterien, gegebenenfalls auch Benutzereingaben entsprechend, vgl. auch die Eingabeeinheit 7' in Fig. 1, festlegen kann, ob und mit welcher Leistung der lokalen Energieversorgungsanlage 6 oder des öffentlichen Energieversorgungsnetzes 3 der Energiespeicher 10 geladen werden soll.

Die Steuereinrichtung 7 ist zudem mit zumindest einem Verbraucher verbunden, um diesen automatisch und/oder Benutzereingaben entsprechend zu aktivieren und zu deaktivieren. Gemäß dem Beispiel in Fig. 1 ist die Steuereinrichtung 7 mit den Gruppen G1-G4 verbunden, sodass jeweils zumindest ein Verbraucher dieser Gruppen G1-G4 aktiviert und deaktiviert werden kann. Außerdem ist zwischen jeder Gruppe G1-G4 und dem öffentlichen Energieversorgungsnetz 3 bzw. dem Hausleitungsnetz 2 eine mit der Steuereinrichtung 7 verbundene Trennvorrichtung 12.1-12.4 vorgesehen, sodass die Gruppen G1-G4 vom öffentlichen Energieversorgungsnetz 3 getrennt werden können und das Energieversorgungssystem 1 nur mit lokal verfügbarer Energie betrieben werden kann. Zur Erfassung und Verarbeitung allfälliger aus dem öffentlichen Energieversorgungsnetz 3 bezogener oder in dieses eingespeister Energie ist die Steuereinrichtung 7 mit den Stromzählern 4.1-4.4 verbunden.

Die Steuereinrichtung 7 weist vorzugsweise eine Internetschnittstelle 13 auf. Hiermit kann beispielsweise ein Betreiber eines öffentlichen Energieversorgungsnetzes 3 um Energielieferung aus dem Energieversorgungssystem 1 ansuchen, sodass lokal erzeugte Energie auch Verbrauchern zugute kommt, die nicht an das Energieversorgungssystem 1 angeschlossen sind. Zudem können über diese Schnittstelle 13 (und z.B. die Eingabeeinheit 7') Wetterdaten empfangen werden.

Auch wenn in Fig. 1 das Energieversorgungssystem 1 mit dreiphasig ausgebildeten Wechselrichtern 5.1-5.4 dargestellt ist, können ebenso einphasige Wechselrichter verwendet werden, um jeweils nur Verbraucher, die mit einer einzigen Phase verbunden sind, mit lokal erzeugter Energie zu versorgen. Demnach würden an die anderen Phasen angeschlossene Verbraucher z.B. mit Strom aus dem öffentlichen Energieversorgungsnetz 3 versorgt werden können.

Die Steuereinrichtung 7 steuert die Wechselrichter 5.1-5.4, um eine von der Steuereinrichtung 7 festgelegte Leistung zu den Gruppen G1-G4 und gegebenenfalls gleichzeitig in das öffentliche Energieversorgungsnetz 3 zu liefern. Hierfür ermittelt die Steuereinrichtung 7 mittels der ersten Sensoren 8.1-8.4 den Leistungsbedarf der Gruppen G1-G4, mittels der zweiten Sensoren 9.1 die lokal erzeugte Leistung und mittels der zweiten Sensoren 9.2 die Speicherladung des Energiespeichers 10.

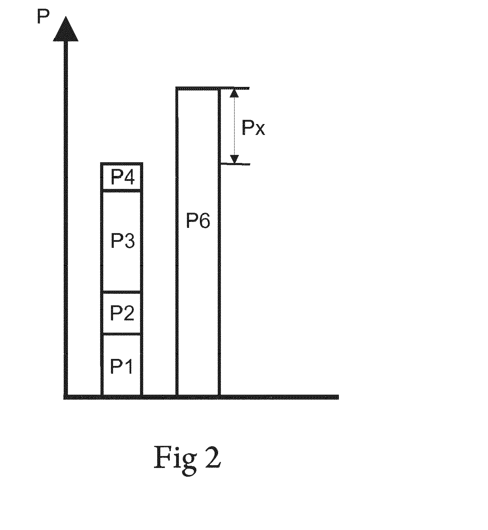

Fig. 2 zeigt ein Beispiel von im Energieversorgungssystem 1 auftretenden Leistungen. Hierbei bezeichnen P1-P4 den jeweiligen Leistungsbedarf der Gruppen G1-G4 und P6 die von der lokalen Energieversorgungsanlage 6 aktuell erzeugte Leistung, welche den Leistungsbedarf der Gruppen G1-G4 übersteigt. Die überschüssige, für die Versorgung der Gruppen G1-G4 nicht benötigte Leistung Px = P6-P4-P3-P2-P1 kann somit vollständig oder auch nur teilweise für die Ladung des Energiespeichers 10 verwendet werden, sofern dieser nicht vollständig aufgeladen ist. Sollte trotz Ladung des Energiespeichers 10 noch ein Rest überschüssiger Leistung Px vorhanden sein, kann dieser Rest, gleichzeitig zur Ladung des Energiespeichers 10 und zur Versorgung der Gruppen G1-G4 mit elektrischer Leistung, in das öffentliche Energieversorgungsnetz 3 eingespeist werden. Wenn hingegen, in einem nicht dargestellten Beispiel, die verfügbare Leistung, d.h. die mit der lokalen Energieversorgungsanlage 6 aktuell erzeugte Leistung und die aus dem Energiespeicher 10 entnehmbare Leistung, geringer als der Leistungsbedarf der Gruppen G1-G4 ist, kann den Gruppen G1-G4 entweder zusätzlich Energie aus dem öffentlichen Energieversorgungsnetz 3 zugeführt werden, oder es werden einzelne Verbraucher der Gruppen G1-G4 von der Steuereinrichtung 7 deaktiviert, um zu versuchen den somit verringerten Leistungsbedarf der Gruppen G1-G4 mit lokal erzeugter Energie zu decken.

## Patentansprüche

1. Energieversorgungssystem (1) zur Versorgung mehrerer Gruppen (G1-G4) von Verbrauchern mit elektrischer Energie, wobei jede Gruppe (G1-G4) über einen eigenen Stromzähler (4.1-4.4) mit einem öffentlichen Energieversorgungsnetz (3) verbunden ist, **dadurch gekennzeichnet, dass** jede Gruppe (G1-G4) zusätzlich über jeweils einen Wechselrichter (5.1-5.4) mit einer einzigen, für alle Gruppen (G1-G4) gemeinsamen lokalen Energieversorgungsanlage (6) verbunden ist, wobei jeder Wechselrichter (5.4-5.4) steuerbar mit einer zentralen Steuereinrichtung (7) verbunden ist, welche zur Einstellung der von jedem Wechselrichter (5.4-5.4) an die damit verbundene Gruppe (G1-G4) und /oder das öffentliche Energieversorgungsnetz (3) bereitzustellenden elektrischen Leistung ausgebildet ist.

2. System (1) nach Anspruch 1, **dadurch gekennzeichnet, dass** die Steuereinrichtung (7) zur Einstellung der von jedem Wechselrichter (5.1-5.4) bereitzustellenden Leistung mit zwischen jeder Gruppe (G1-G4) und dem öffentlichen Energieversorgungsnetz (3) angeordneten, den Leistungsbedarf jeder Gruppe (G1-G4) erfassenden ersten Sensoren (8.1-8.4) verbunden ist.

3. System (1) nach Anspruch 1 oder 2, **dadurch gekennzeichnet, dass** die Steuereinrichtung (7) zur Erfassung der lokal verfügbaren, elektrischen Leistung mit zwischen der lokalen Energieversorgungsanlage (6) und den Wechselrichtern (5.1-5.4) angeordneten zweiten Sensoren (9.1, 9.2) verbunden ist.

4. System (1) nach Anspruch 3, **dadurch gekennzeichnet, dass** zwischen der lokalen Energieversorgungsanlage (6) und den Wechselrichtern (5.1-5.4) ein elektrischer Energiespeicher (10) mit einem Laderegler (11) angeordnet ist, die zweiten Sensoren (9.1, 9.2) zur Erfassung der lokal verfügbaren Leistung mit dem Energiespeicher (10) und vorzugsweise auch mit der lokalen Energieversorgungsanlage (6) verbunden sind, und der Laderegler (11) zur steuerbaren Ladung des Energiespeichers (10) mit der Steuereinrichtung (7) verbunden ist.

5. System (1) nach Anspruch 3 oder 4, **dadurch gekennzeichnet, dass** die Steuereinrichtung (7) ausgebildet ist, bei über den Bedarf aller Gruppen (G1-G4) hinausgehender lokal verfügbarer Leistung den für jede Gruppe (G1-G4) erfassten Leistungsbedarf plus einen Anteil der über den Bedarf aller Gruppen (G1-G4) hinausgehenden lokal verfügbaren Leistung als bereitzustellende elektrische Leistung am jeweiligen, der Gruppe (G1-G4) zugeordneten, Wechselrichter (5.1-5.4) einzustellen.

6. System (1) nach Anspruch 4 und 5, **dadurch gekennzeichnet, dass** bei vollständig geladenem elektrischen Energiespeicher (10) die Summe der über die Wechselrichter (5.1-5.4) zusätzlich zum erfassten Leistungsbedarf bereitzustellenden Anteile zumindest die über den Bedarf aller Gruppen (G1-G4) hinausgehende lokal erzeugte Leistung ist.

7. System (1) nach Anspruch 4 und 5, oder nach Anspruch 6, **dadurch gekennzeichnet, dass** bei nicht vollständig geladenem elektrischen Energiespeicher (10) zur Ladung des Energiespeichers (10) die Summe der über die Wechselrichter (5.1-5.4) zusätzlich zum erfassten Leistungsbedarf bereitzustellenden Anteile weniger als die über den Bedarf aller Gruppen (G1-G4) hinausgehende lokal erzeugte Leistung ist.

8. System (1) nach einem der Ansprüche 5 bis 7, **dadurch gekennzeichnet, dass** die Steuereinrichtung (7) ausgebildet ist, das Verhältnis der Anteile zueinander Benutzereingaben entsprechend festzulegen.

9. System (1) nach einem der Ansprüche 1 bis 8, **dadurch gekennzeichnet, dass** die Steuereinrichtung (7) mit zumindest einem Verbraucher verbunden und ausgebildet ist, diesen Verbraucher automatisch und/oder Benutzereingaben entsprechend zu aktivieren und zu deaktivieren.

10. System (1) nach Anspruch 9, **dadurch gekennzeichnet, dass** die Steuereinrichtung (7) ausgebildet ist, bei einer den Bedarf aller Gruppen (G1-G4) nicht deckenden lokal verfügbaren Leistung zumindest einen Verbraucher, vorzugsweise Benutzereingaben entsprechend, automatisch zu deaktivieren oder nicht zu aktivieren, und gegebenenfalls weiteren Benutzereingaben entsprechend wieder zu aktivieren.

11. System (1) nach einem der Ansprüche 1 bis 10, **dadurch gekennzeichnet, dass** die Steuereinrichtung (7) mit zumindest einer, zwischen einer Gruppe (G1-G4) und dem öffentlichen Energieversorgungsnetz (3) angeordneten Trennvorrichtung (12.1-12.4) zum steuerbaren Trennen der Gruppe (G1-G4) vom damit verbundenen öffentlichen Energieversorgungsnetz (3) verbunden ist.

12. System (1) nach einem der Ansprüche 1 bis 11, **dadurch gekennzeichnet, dass** die lokale Energieversorgungsanlage (6) eine Photovoltaik-Anlage ist.

13. System (1) nach einem der Ansprüche 1 bis 12, **dadurch gekennzeichnet, dass** die Steuereinrichtung (7) zur Erfassung der aus dem öffentlichen Energieversorgungsnetz (3) bezogenen bzw. in das öffentlichen Energieversorgungsnetz (3) eingespeisten Energie mit den mit jeder Gruppe (G1-G4) verbundenen Stromzählern (4.1-4.4) verbunden ist.

14. System (1) nach einem der Ansprüche 1 bis 13, **dadurch gekennzeichnet, dass** die Steuereinrichtung (7) eine Internetschnittstelle (13) aufweist und ausgebildet ist, Anfragen zur Einspeisung lokal verfügbarer Leistung in das öffentliche Energieversorgungsnetz (3) entgegenzunehmen und gegebenenfalls die Wechselrichter (5.1-5.4) für eine solche Einspeisung zu steuern.

15. System (1) nach einem der Ansprüche 1 bis 14, **dadurch gekennzeichnet, dass** die Steuereinrichtung (7) eine Internetschnittstelle (13) aufweist und zur Ausführung ihrer Steuerfunktionen abhängig von über die Internetschnittstelle (13) empfangenen Wetterdaten ausgebildet ist.

16. System (1) nach einem der Ansprüche 5 bis 15, wenn abhängig von Anspruch 4, **dadurch gekennzeichnet, dass** zur Ladung des elektrischen Energiespeichers (10) mit Energie aus dem öffentlichen Energieversorgungsnetz (3) die Wechselrichter (5.1-5.4) für bidirektionalen Stromtransport ausgebildet sind und die Steuereinrichtung (7) zur Einstellung der von jedem Wechselrichter (5.1-5.4) an den damit verbundenen elektrischen Energiespeicher (10) bereitzustellenden elektrischen Leistung ausgebildet ist.

17. System (1) nach einem der Ansprüche 1 bis 16, **dadurch gekennzeichnet, dass** die Wechselrichter (5.1-5.4) dreiphasig ausgebildet sind.
